# EUROPÄISCHE PATENTSCHRIFT

(11) **EP 1 838 559 B1**
(45) Veröffentlichungstag und Bekanntmachung des Hinweises auf die Patenterteilung: **14.05.2008**
(21) Anmeldenummer: 05822340.5
(22) Anmeldetag: 16.12.2005
(51) Int. Cl.: B60R 21/16

(54) **PERSONENRÜCKHALTESYSTEM**
OCCUPANT RESTRAINT SYSTEM
SYSTEME DE RETENUE POUR INDIVIDUS

(30) Priorität: 21.01.2005 DE 102005002962
(43) Veröffentlichungstag der Anmeldung: 03.10.2007
(73) Patentinhaber: BST Safety Textiles GmbH, 79689 Maulburg (DE)
(72) Erfinder: BUSSKAMP, Heinz, 79618 Rheinfelden (DE); RUSCHULTE, Jörg, 79736 Rickenbach (DE)
(74) Vertreter: Fischer, Matthias
(86) Internationale Anmeldenummer: PCT/EP2005/013589
(87) Internationale Veröffentlichungsnummer: WO 2006/076955

(56) Entgegenhaltungen:
- DE-A1- 19 951 029
- US-A- 4 565 535
- US-A- 5 333 899

## Beschreibung

Die vorliegende Erfindung betrifft ein Personenrückhaltesystem für Fahrzeuge zu Lande, zu Wasser, im Raum oder in der Luft, insbesondere Kraftfahrzeuge, mit wenigstens zwei Luftsäcken, die im Falle einer Fahrzeugkollision aufgeblasen werden sollen.

Es sind eine Vielzahl von Airbagsystemen oder von Anordnungen mehrerer Airbags in Fahrzeugen bekannt, die im Falle einer Kollision einen Insassen des Fahrzeugs bei einem Seitenaufprall oder einem Frontalaufprall schützen sollen. Die als Airbagsysteme ausgebildeten Personenrückhaltesysteme sollen verhindern, daß die Fahrzeuginsassen auf die harte Struktur des Fahrzeugs aufprallen und die Passagiere mit Rückhaltesystemen, wie beispielsweise Luftsäcken, abzufangen. Nun hat sich gezeigt, daß alle diese Vorrichtungen einen großen Nachteil haben, nämlich daß sie nicht aufeinander abgestimmt sind, so daß, obwohl in den Fahrzeugen eine ganze Reihe von Airbagsystemen vorliegen, immer noch Möglichkeiten gegeben sind, daß die Passagiere zwischen den sich sogar berührenden Airbags hindurch auf eine harte Fahrzeugstruktur prallen können. Dies hat dann natürlich fatale Folgen für den Insassen, da er, obwohl er von einer Reihe von Airbags umgeben ist, doch nicht vollständig gegen einen Aufprall auf bestimmte Strukturen im Fahrzeug geschützt ist, insbesondere wenn der Passagier im Moment der Kollision eine Stellung "out of position" einnahm, d.h. nicht "normal" auf seinem Sitz saß. Schwerste Verletzungen können die Folge sein, die durch auch nach bisherigem Standard korrekt arbeitende Luftsäcke nicht vermieden werden können.

Aus der US-A-5 333 899 (WITTE ET AL) ist ein Personenrückhaltesystem für Kraftfahrzeuge bekannt, mit wenigstens zwei Luftsäcken 20, 25, die im Falle einer Fahrzeug-Kollision aufgeblasen werden sollen. Die beiden Luftsäcke werden nach dem Aufblasen mittels einer Klettverschlussverbindung 30 verbunden.

Der Erfindung liegt die Aufgabe zu Grunde, ein Personenrückhaltesystem für Fahrzeuge vorzuschlagen, mit dem die aus dem Stand der Technik bekannten Nachteile vermieden oder zumindest stark vermindert werden.

Die Aufgabe wird gelöst durch ein Personenrückhaltesystem gemäß Anspruch 1, welches durch Einrichtungen gekennzeichnet ist, die geeignet sind, die Luftsäcke im Kollisionsfall wenigstens zeitweise miteinander zu verbinden. Diese Ausbildung des erfindungsgemäßen Personenrückhaltesystems hat den großen Vorteil, daß die Passagiere durch die im Kollisionsfall miteinander verbundenen Airbags rundherum gegen einen Aufprall auf Strukturteile des Fahrzeugs geschützt sind. Die wenigstens zeitweise Verbindung der Luftsäcke soll wenigstens für den Zeitraum ab Kollision bis das Fahrzeug zur Ruhe gekommen ist bestehen bleiben, danach aber, um für Rettungskräfte kein Hindernis darzustellen, wieder gelöst sein.

In einer vorteilhaften Weiterentwicklung der Erfindung weisen die Luftsäcke Einrichtungen auf, die geeignet sind, die Luftsäcke miteinander zu verbinden. In einer vorteilhaften Ausbildung der Erfindung ist das System durch Luftsäcke gekennzeichnet, die beim Aufblasen entwickelbare Ausdehnungen aufweisen, die in Ausnehmungen benachbarter Luftsäcke passen. Dies kann beispielsweise in Form einer Verzinkung sein, die aus der Eckfügung von Schubladenwänden bekannt ist. Hierbei können sich die Zinken der jeweiligen Luftsäcke so zeitlich aufeinander abgestimmt zueinander oder ineinander hinein entwickeln, so daß im voll entwikkelten Zustand eine feste, auch einem Aufprall eines Passagiers widerstehen könnende Verbindung geschaffen wird.

In einer weiteren vorteilhaften Ausbildung der Erfindung sind die Ausdehnungen mit den Ausnehmungen verriegelbar ausgebildet, was zu einer noch sichereren und festeren temporären Verbindung der benachbarten Lufisäcke führt.

In einer weiteren vorteilhaften Ausbildung des erfindungsgemäßen Systems sind Einrichtungen vorgesehen, die geeignet sind, die Luftsäcke zielgerichtet aufeinander zu zu bewegen und zu verbinden. Diese Einrichtungen müssen nicht direkt an den Luftsäcken selbst angeordnet sein, wie oben beschrieben. Sie können vielmehr in Spannbändern bestehen, die die lokale Entwicklung der Airbags beim Aufblasen regulieren und diese zueinander bewegen. Dies kann vorteilhafterweise durch Spannbänder gelöst werden, die die Luftsäcke gegeneinander ziehen können.

Zum besseren Verständnis der Erfindung wird diese im folgenden kurz anhand von Ausführungsbeispielen unter Bezugnahme auf eine Zeichnung kurz beschrieben.
- Figur 1: zeigt, sehr stark schematisiert, einen Seitenairbag von der Seite, der mit einer Ausnehmung für einen Front- oder Fahrer/Beifahrerairbag versehen ist.
- Figur 2a: zeigt, sehr stark schematisiert, einen Frontairbag im entwickelten Zustand mit einer Ausdehnung, welche in die Ausnehmung des in Figur 1 gezeigten Seitenairbags paßt.
- Figur 2b: zeigt, ebenfalls sehr stark schematisiert, einen Frontairbag als Abwandlung des in Figur 2a gezeigten Airbags mit einer Verriegelungsausdehnung zur Verriegelung mit einem, beispielsweise in Figur 1 gezeigten, Seitenairbag.
- Figur 3: zeigt, stark schematisiert, ausschnittsweise eine Situation, in der ein Seitenairbag und ein Frontairbag miteinander verbunden dargestellt sind.
- Figur 4: zeigt eine der Figur 1 ähnliche Darstellung eines Seitenairbags mit einer alternativen Ausnehmung zur Aufnahme einer Ausdehnung eines benachbarten Airbags.
- Figur 5a: zeigt ausschnittsweise schematisch eine Ausdehnung eines Frontairbags zur Verbindung mit einer Ausnehmung eines in Figur 4 gezeigten Seitenairbags.
- Figur 5b: zeigt eine Variante der Darstellung nach Figur 5a, welche ebenfalls in eine Ausnehmung eines gemäß Figur 4 schematisch dargestellten Seitenairbags paßt.

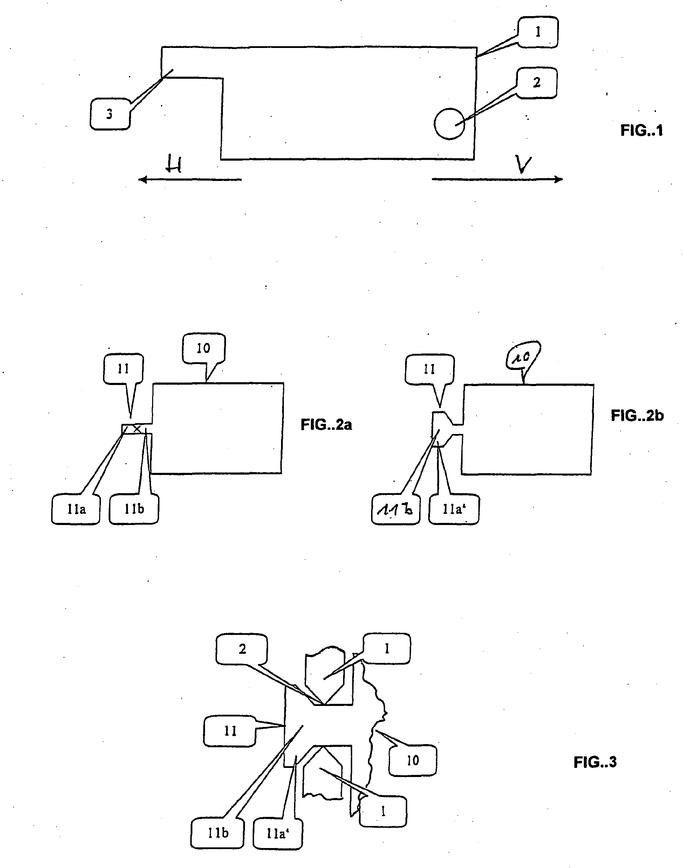

Ein erfindungsgemäßes Personenrückhaltesystem enthält beispielsweise einen, in Figur 1 dargestellten Seitenairbag 1 und einen Fahrerairbag. Der Seitenairbag 1 muß erfahrungsgemäß aufgrund des geringen Abstandes des Passagiers, beispielsweise Fahrers zur Seitenstruktur eines Fahrzeugs schneller aufgeblasen werden als ein Frontairbag, welcher im Vergleich zum Seitenairbag einen größeren Abstand zum Insassen des Fahrzeugs hat. Der in Figur 1 gezeigte Seitenairbag 1 hat an der in Richtung des Pfeils V, d.h. in Fahrtrichtung zeigenden Seite eine Ausnehmung 2, die sich beispielsweise durch die Wandung des Seitenairbags 1 hindurch erstreckt. Auf der in Richtung des Pfeiles H, d.h. nach hinten zeigenden Seite des Seitenairbags in Figur 1 ist ein Gaseinlaß 3 angegeben, durch welchen der Seitenairbag 1 mit Aufblasgas gefüllt wird.

Figur 2a zeigt einen Fahrerairbag 10 im aufgeblasenen Zustand, an dem seitlich ein Zapfen 11 ausgebildet dargestellt ist. Beim Aufblasen entfaltet sich der Luftsack 10 zunächst an sich, worauf dann das Mittelteil 11b des Zapfens entfaltet wird. Entfalten sich der Luftsack 10 sowie der Zapfen 11 korrekt, so werden sie direkt vor der Ausnehmung 2 des in Figur 1 gezeigten Luftsacks 1 positioniert. In der anschließenden Entfaltung des Zapfens 11 bewegt sich das Mittelteil 11b durch die Ausnehmung 2 hindurch. Vorteilhafterweise ist die Dimensionierung des Endes des Zapfens 11 größer als die der Ausnehmung 2 ausgelegt, so daß eine Rückwärtsbewegung des Zapfens 11 aus der Ausnehmung 2 nach Entwicklung des Zapfens nicht mehr möglich ist und damit eine feste Verbindung zwischen den beiden Luftsäcken Seitenluftsack 1 und Frontairbag 10 entsteht.

Aus Figur 2b ist die hammerkopfartige Verbreiterung 11a' des Endes des Zapfens 11 schematisch dargestellt. Etwas vergrößert und maßstäblich nicht korrekt, jedoch qualitativ klar ersichtlich, ist in Figur 3 die Verbindung der beiden bruchstückhaft gezeigten Airbags, nämlich Seitenluftsack 1 (im Schnitt durch die Ausnehmung 2) und Frontairbag 10 dargestellt, wobei schön zu erkennen ist, wie sich die hammerkopfartige Verbreiterung des Zapfens 11 durch die Ausnehmung 2 des Seitenairbags 1 hindurch erstreckt.

Diese Verbindung kann nach dem Druckabfall nach der Kollision sehr leicht wieder getrennt werden. Rettungsmannschaften, die nach der Kollision sehr schnell zu eventuell verletzten Passagieren vordringen müssen, oder auch die Passagiere selbst, die das Fahrzeug nach der Kollision verlassen wollen, werden durch die miteinander verbundenen Airbags nicht behindert. Sie lassen sich nach ihrem Kollabieren einfach beiseite schieben und trennen.

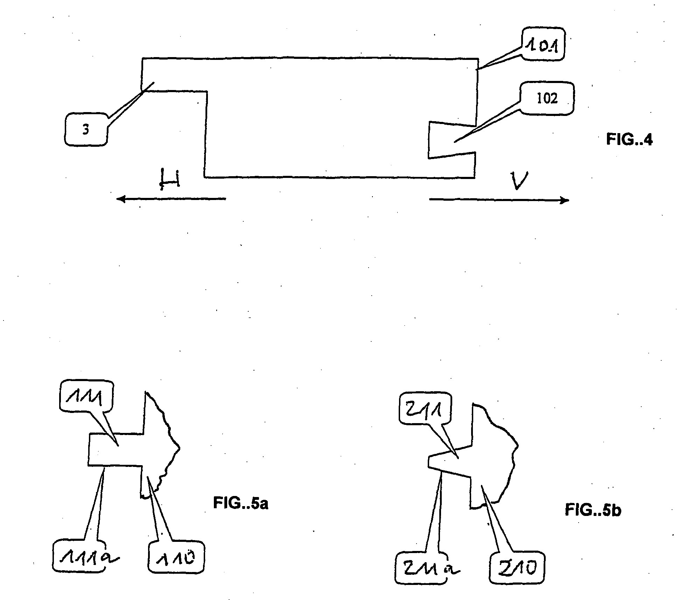

Figur 4 zeigt eine Variante der Ausnehmungen, dargestellt bei einem Seitenairbag 101. Man erkennt eine schwalbenschwanzförmige Ausnehmung 102 im vorderen Bereich des Seitenairbags 101, in den ein entsprechender Zapfen 111, z.B. eines in Figur 5a teilweise dargestellten Frontairbags 110 mit einer entsprechenden Kontur 111a hineinpaßt. In den Figuren 1 und 4 sind durch Pfeile H für hinten und V für vorne die Lagen der jeweiligen Seitenairbags gezeigt. Wie bereits erwähnt, soll hier beispielhaft gezeigt werden, wie im vorderen Bereich eines Seitenairbags eine Verbindung mit einem Frontairbag ermöglicht werden soll. Selbstverständlich ist die Erfindung nicht auf die hier gezeigten Beispiele beschränkt. Die Verbindung von zwei nebeneinander liegenden Frontairbags oder auch anderen benachbarten Seitenairbags, Kopfairbags, Beckenairbags usw. ist ebenfalls mit dem erfindungsgemäßen Personenrückhaltesystem möglich.

Figur 5b zeigt abschnittsweise einen Frontairbag 210 und einen daran angebrachten Zapfen 211a, der hier kegelförmig ausgebildet ist und in eine entsprechende (nicht gezeigte) kegelförmige Ausnehmung an entsprechender Stelle eines nach dem erfindungsgemäßen Prinzip gestalteten Seitenairbags hineinpaßt und dadurch mit ihm verbunden werden kann.

Die vorliegende Erfindung betrifft ein Personenrückhaltesystem für Fahrzeuge zu Lande, zu Wasser, im Raum oder in der Luft, insbesondere Kraftfahrzeuge, mit wenigstens zwei Luftsäcken, wobei die zwei Luftsäcke in Sinne der Erfindung auch vorzugsweise aus zwei einteiligen Luftsäcken oder wenigstens einem wenigstens zweiteiligen Luftsack oder Kombinationen hiervon bestehen können.

Die heute eingesetzten Airbags arbeiten durchgehend als eigenständige Insellösungen für das Abfangen von Fahrzeuginsassen. Hierbei werden gleichzeitig arbeitende Airbagsysteme, wie Seitenairbags, Dachairbags, Frontairbags nicht aufeinander abgestimmt. Es ist Teil der Erfindung, die Aneinanderkettung bzw. die gezielte zeitliche Abstimmung von gegebenenfalls temporär für sich arbeitenden Airbags zu realisieren, um einen Rundumschutz für Passagiere in einem Fahrzeug zu ermöglichen. Daneben kommt noch ein weiterer vorteilhafter Aspekt hinzu, nämlich daß sich die Airbags in ihrer Verbindungsposition als "geschlossener Käfig" gegenseitig stabilisieren. Dies betrifft insbesondere Airbags, die aus dem oberen Bereich eines Fahrzeugs heraus entwickelt werden sowie Airbags, die nicht im feststehenden Armaturenbrettbereich eines Fahrzeugs positioniert sind, die, da sie nur einen Fixpunkt besitzen und deshalb relativ unstabil sind, in ihrer Leistungsfähigkeit stark eingeschränkt sind. Diese Einschränkung wird stark vermindert durch die zuvor beschriebene Stabilisierung von Airbags durch gegenseitiges Aneinanderketten.

Die Vorteile der Erfindung können noch verstärkt werden dadurch, daß die Verbindung (Verlinkung) der Airbags in einer zeitlich optimiert abgestimmten Auslösung von zunächst unabhängigen Airbagsystemen durchgeführt wird. Ausgehend von diesem Gedanken ist auch der Vorteil noch zu betonen, daß die Zusammenarbeit von einzelnen schwächeren Bauteilen durch eine hier mehrmals geschilderte Verbindung schlußendlich eine Stärkung der einzelnen Komponente mit sich bringt. Im Ergebnis kann auf der Basis dieser Überlegungen die einzelne Komponente gegenüber heute bekannten Komponenten schwächer ausgeführt werden und damit letztendlich auch eine beträchtliche Kostenersparnis bei gleichzeitiger Verbesserung der sich verlinkenden Airbagsysteme und der sich für den Insassen entwickelnden Sicherheit erzielt werden.

## Patentansprüche

1. Personenrückhaltesystem für Fahrzeuge zu Lande, zu Wasser, im Raum oder in der Luft, insbesondere Kraftfahrzeuge, mit wenigstens zwei Luftsäcken, die im Falle einer Fahrzeug-Kollision aufgeblasen werden sollen, **dadurch gekennzeichnet, daß** einer der Luftsäcke beim Aufblasen entwickelbare Ausdehnungen (11) aufweist, die in beim Aufblasen entwickelbare Ausnehmungen (2) des anderen Luftsackes hineinpassen, wobei die Einrichtungen (2, 11, 102, 111, 211) geeignet sind, die Luftsäcke im Kollisionsfall nur zeitweise miteinander zu verbinden.

2. System nach Anspruch 1, **dadurch gekennzeichnet, daß** die Luftsäcke aus zwei einteiligen Luftsäcken oder aus einem wenigstens zweiteiligen Luftsack oder aus Kombinationen hiervon bestehen.

3. System nach Anspruch 1 oder 2, **dadurch gekennzeichnet, daß** die Ausdehnungen mit den Ausnehmungen verriegelbar ausgebildet sind.

4. System nach Anspruch 1, **gekennzeichnet durch** Einrichtungen, die geeignet sind, die Luftsäcke zielgerichtet aufeinander zu zu bewegen und zu verbinden.

5. System nach Anspruch 1, **gekennzeichnet durch** Spannbänder, die die Luftsäcke gegeneinander ziehen können.

## Claims

1. A vehicle occupant restraint system for air, land, sea or space vehicles, particularly motor vehicles, including at least two air bags to be inflated in case of a vehicle collision, **characterized in that** one of the air bags comprises extensions (11) developing on inflation which key into recesses (2) of the other air bag developing on inflation, the means (2, 11, 102, 111, 211) being suitable to interconnect the air bags only temporarily in the case of collision.

2. The system as set forth in claim 1, **characterized in that** the air bags consist of two one-part air bags or of an at least two-part air bag or of combinations thereof.

3. The system as set forth in claim 1 or 2, **characterized in that** the extensions are configured lockable with the recesses.

4. The system as set forth in claim 1, **characterized by** means suitable to move the air bags towards each other and to connect them targetted.

5. The system as set forth in claim 1, **characterized by** tensioning tapes for pulling the air bags against each other.

## Revendications

1. Système de retenue pour individus pour véhicules à terre, sur l'eau, dans l'espace ou dans l'air, notamment pour véhicules automobiles, comportant au moins deux coussins gonflables, qui sont gonflés dans le cas d'une collision de véhicules, **caractérisé en ce qu'**un des coussins gonflables présente des extensions pouvant se déployer au gonflement (11), qui se logent dans des creux pouvant se déployer (2) lors du gonflement de l'autre coussin gonflable, les dispositifs (2, 11, 102, 111, 211) étant adaptés à relier les coussins gonflables entre eux seulement passagèrement dans le cas d'une collision.

2. Système selon la revendication 1, **caractérisé en ce que** les coussins gonflables consistent en deux coussins gonflables d'une pièce ou en un coussin gonflable en deux parties au moins ou en une combinaison des deux.

3. Système selon la revendication 1 ou 2, **caractérisé en ce que** les extensions sont formées de manière à pouvoir être verrouillées avec les creux.

4. Système selon la revendication 1, **caractérisé par** des dispositifs qui sont adaptés à mouvoir les coussins gonflables l'un vers l'autre de manière ciblée et à les relier.

5. Système selon la revendication 1, **caractérisé par** des bandes de serrage qui peuvent tirer les coussins gonflables l'un vers l'autre.
